# EUROPEAN PATENT APPLICATION

(11) **EP 4 700 642 A1**
(43) Date of publication of application: **25.02.2026**
(21) Application number: 25192058.3
(22) Date of filing: 28.07.2025
(51) Int. Cl.: G06F 40/16, G06F 40/186, G06F 40/216, G06F 40/30, G06F 40/35

(54) **SYSTEM AND METHOD FOR PIXEL PERFECT CONVERSION, RETROSPECTIVE SYNTHESIS AND MIGRATION OF PORTABLE DOCUMENT FORMAT (PDF) FILE INTO EDITABLE DESIGN TEMPLATES**

(30) Priority: 27.07.2024 US 202463676367 P
(71) Applicant: Elixir Technologies Corporation, Ojai, CA 93023 (US)
(72) Inventor: SHAFIQ, Muhammad Shahid, Islamabad (PK); KOEHN, Elizabeth Ann, Ojai, CA 93023 (US); LYNN, Timothy Francis, Thousand Oaks, CA 91360 (US)
(74) Representative: Calysta NV

(57) **Abstract**

Systems and methods to effectively and efficiently replace a legacy CCM product from a first Customer Communication Management (CCM) software application with a newer solution in a second CCM software application, and transition these large-scale and highly regulated Customer Communications Management documents. Embodiments of the present invention present systems and methods that minimize the need for manual template and business logic redevelopment, ensures a substantially pixel-perfect layout format and data alignment, reduces the necessity of operating both the legacy and new CCM products concurrently for an extended duration, and mitigate the risk of data integrity issues during the product transition process. Embodiments of the present invention provide for automated migration of CCM design templates and business rules when transitioning from one CCM vendor (e.g. legacy vendor) having a first CCM software application, to another CCM vendor having a second CCM software application. This was not feasible prior to this invention.

## Description

### BACKGROUND OF THE INVENTION

### Field of the Invention

This invention pertains to techniques and software designed for the conversion of files, data and assets, specifically focusing on methods and software that facilitate the conversion, synthesis, and migration of Portable Document Format (PDF) files into editable design templates that incorporate automated reconstruction of layouts, variable personalization rules and third-party system data mappings.

### Description of Related Art

Historically, companies aiming to replace their Customer Communications Platform and Software possess an asset inventory that includes hundreds to thousands of design templates. The process of manually recreating these assets requires collaboration with stakeholders and participants from various departments, including Marketing, Information Technology, Operations, Risk and Compliance, and Customer Support Services. This undertaking can be expensive and time-consuming, often relying on manual systems implementation and professional services to recreate master document template designs, forms, business logic, and data integrations from the ground up when transitioning from an existing vendor's Customer Communications Management (CCM) software to a new vendor's CCM software application.

The re-development, review, and approval processes for CCM assets (design templates layouts, business rules, imagery, etc.) can require extensive manual effort, ranging from days to months for each template design. This is particularly true for designs that must adhere to industry-regulated communication standards, including personally identifiable information (Pll), protected health information (PHI), or payment card industry (PCI) regulations.

It is important to note that many of these regulated Communication Template Designs are critical to business operations, and any alterations in format or layout of the Customer Communications output necessitate re-submission and formal written approval from the relevant internal auditor and local, state, or federal regulator.

Numerous PDF file parsing tools are currently available in the market that can be utilized to examine and discern the content present in a historical as-is CCM document design output. Nevertheless, the application of many of these tools (for instance, Optical Character Recognition (OCR) tools and applications like Docparser (www.docparser.com), LayoutPDFReader (https://github.com/nlmatics/llmsherpa#layoutpdfreader) and Apryse (www.apryse.com) amongst others) primarily pertains to the extraction of data, text, and fundamental PDF design layout characteristics to catalog the contents of a PDF file into specifications documentation aimed at supporting manual CCM template redevelopment requirements, rather than facilitating the automation of CCM template and business logic redevelopment processes.

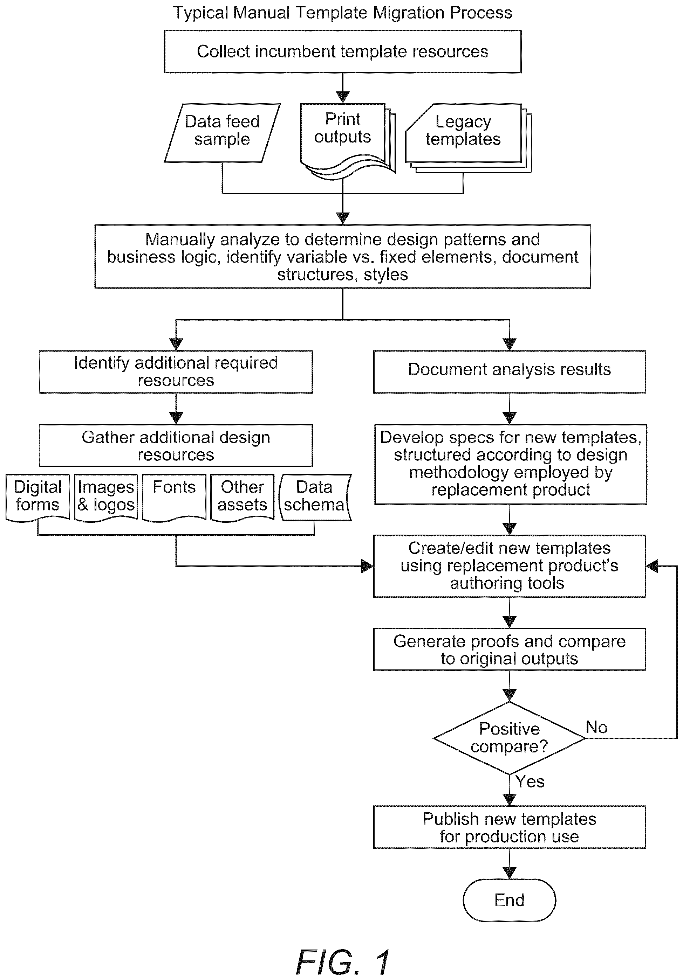

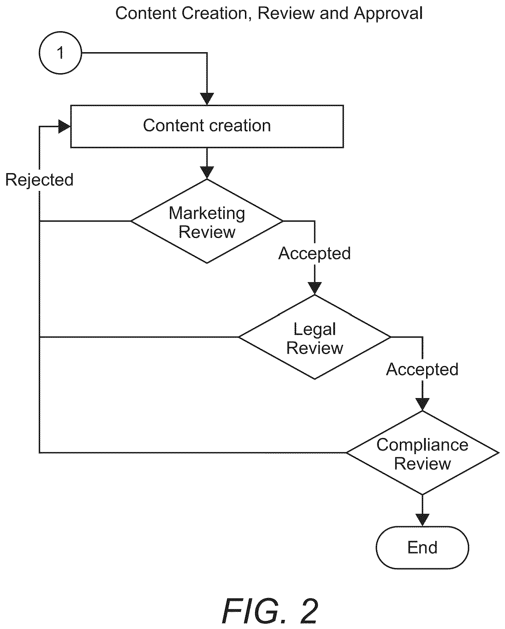

The main methods employed for migrating CCM designs from one vendor's solution to another remains predominantly manual. This process involves the manual downloading of sample print versions of the existing software vendor's CCM design outputs, engaging with business stakeholders to compile a shortlist of the most critical CCM designs and their related dependencies, and subsequently conducting manual reviews, inspections, and analyses of design outputs to pinpoint the necessary features, functions, formats, data integration, and data personalization rules requirements and specifications associated with manual redevelopment. Various PDF parsing tools and/or techniques may be utilized on each individual design output (PDF) to extract some insights regarding the original logic of the as-is CCM design template; however, the overall effort remains largely manual. Once the design requirements, data integration necessities, and business rules of the CCM design template are established, duplicate templates along with the required assets and artifacts are manually created within the software of the new CCM vendor, as detailed below with reference to FIGS. 1 and 2.

FIG.1 illustrates a conventional and prior art manual process for analyzing and migrating CCM documents/templates, which is utilized to assess and gather the specifications for template design requirements. This process is conducted on each existing CCM template separately before the manual recreation of a new CCM template design from the ground up. The manual analysis of CCM templates can potentially be semi-automated through the use of commercially available PDF parsing tools, which assist in capturing the requirements and specifications for template design.

FIG. 2 illustrates the traditional manual method for redeveloping CCM projects, along with the standard workflow linked to user stakeholder design review and approval processes for each CCM template involved in a CCM system migration project. It should be noted that this step is often iterative requiring multiple stakeholder review cycles before the new design template receives final approved.

Additionally, because the CCM software application, CCM design template, data logic, data mapping and schema structure of most commercially available CCM software applications is proprietary and secret in nature, CCM vendor replacement migration projects suffer from the fact that CCM design template layouts and data logic are not portable from one vendor's solution to another. Specifically, the layouts of CCM design templates and the associated data logic are not transferable between different vendors' solutions. Moreover, automated tools intended for systems migration are often of limited use during vendor replacement or system migration scenarios as they generally necessitate a comprehensive working knowledge of the incumbent CCM software vendor's product, database design, logic engine, delivery channel rendering and system architecture. This predicament necessitates extensive and costly manual analysis and redesign efforts.

A traditional CCM vendor migration initiative frequently leads to downtime and unforeseen costs stemming from project rework, budget overruns, and delays in implementation. These issues arise from ambiguities in the requirements for CCM design templates, scope creep, errors in template design recreation, and inadequate fidelity between the existing and new templates. Consequently, the outcome is a CCM system replacement project that is excessively slow, prone to errors, and reliant on manual processes, often extending over months or even years to finalize.

The primary advancements that have taken place in the existing methodologies over the last ten years include the integration of diverse heterogeneous comparative analysis tools and Large Language Models (LLM) like ChatGPT or Claude 2, as well as Intelligent Document Parsing (IDP) which use a combination of retrieval augmented generation (RAG) framework alongside other technologies, including optical character recognition (OCR), natural language processing (NLP), computer vision, machine learning (ML), and artificial intelligence (AI) algorithms. These technologies are utilized to scan, classify, and identify data and its context for the evaluation of CCM outputs, namely compiled PDFs, so that a set of requirements documents can be prepared in advance of manual CCM template redevelopment effort. Additionally, more conventional data manipulation tools, such as extract, transform, and load (ETL) tools, are employed to restructure required 3rd party system data and needed integrations, thereby enhancing some of the manual tasks related to planning data ingestion and mapping requirements.

The predominantly manual method for populating the content of a replacement CCM system entails a thorough examination of another vendor's compiled CCM output and design templates to try to identify replacement template requirements, design assets and business and variable content rules. This process involves segmenting the design migration effort into manageable parts and conducting parallel assessments of compiled (PDF) design outputs, followed by the decomposition of document requirements. Subsequently, there is a manual recoding or redevelopment of both the design template and the data feed integrations, along with the configuration and encoding of business and variable content rules related to the template's data feeds. Additionally, template design reviews are conducted, which may or may not utilize comparative or difference analysis tools. Although this method proves beneficial when transitioning between CCM vendor products for a limited number of non-regulated CCM outputs, it is not necessarily the most efficient in minimizing the manual labor and risks involved in migrating a substantial collection of highly regulated CCM assets. These assets are often subject to strict publication schedules, as well as requirements for data accuracy, integrity checks, and considerations for data privacy.

### SUMMARY OF THE INVENTION

To effectively and efficiently replace a legacy CCM product from a first CCM software application with a newer solution in a second CCM software application, and automatically generate new versions of these large-scale and highly regulated Customer Communications Management documents, embodiments of the present invention present systems and methods that minimizes the need for manual template and business logic redevelopment, ensures a substantially pixel-perfect layout format and data alignment, reduces the necessity of operating both the legacy and new CCM products concurrently for an extended duration, and mitigates the risk of data integrity issues during the product transition process. Embodiments of the present invention provide for automated migration of CCM design templates and business rules when transitioning from one CCM vendor (e.g. legacy vendor) having a first CCM software application, to another CCM vendor having a second CCM software application. This was not feasible prior to this invention.

Embodiment of the present invention can provide automated methods and systems through which CCM design templates, along with their associated assets, business rules and data feeds, can be recreated automatically. The present invention eliminates the need for software vendors or system implementation specialists to examine the intricate details of competing vendor CCM solutions. These embodiments also eliminate the need for extensive time frames dedicated to manual analysis of CCM design templates, manual redevelopment of template and data mappings, or the simultaneous operation of multiple CCM products due to standard system migration scenarios.

Embodiments of the present invention seek to address shortcoming in the prior art and to provide a system and method for automatically completing a retrospective analysis and the automated synthesis of pixel perfect and editable CCM design Templates inclusive of external source data logic mapping and the automatic generation of personalization rules for variable data tags from any Portable Document Format (PDF) File and its related external integration data feed. More specifically embodiments of the present invention provide a systems and methods for fully automating the requirements capture and development of new CCM template designs (inclusive of design assets, objects, images, barcodes formats, content formatting, page layout, data sources and data mapping rules). These embodiments can result in the generation of pixel perfect and performance optimized design template layouts from a source data feed and a compiled PDF output using a heterogeneous mix of migration and artificial intelligence and machine learning technologies.

The invention allows a CCM customer to rapidly and cost effectively complete a CCM system migration/replacement project without a need to manually recreate their historical CCM project templates from scratch.

As previously mentioned, the present invention provides a swift and entirely automated method and process for migrating CCM document outputs, templates, design layouts and business rules from one CCM vendor's software application to that of another vendor, all while respecting the intellectual property rights of the existing CCM vendor. This is achieved by utilizing a diverse and heterogeneous array of migration, artificial intelligence and machine learning algorithms that specifically evaluates the design template and data logic mapping requirements, alongside the dynamic recreation and generation of a new, substantially pixel-perfect CCM Design Template derived from a non-proprietary and compiled PDF output, as well as original source data integration feed. This novel method and approach allow for the conversion and migration of any PDF file, irrespective of its origin, into an editable CCM design template with substantially complete design fidelity. Consequently, this invention has the potential to condense what typically takes months or even years of manual analysis, data mapping, and template recreation into mere minutes, thereby liberating resources and significantly lowering the overall costs associated with system implementation and replacement.

Embodiments of the present invention can utilize machine learning, generative Al, and agentic Al for inference automation, and for the automated development and quality review of new CCM template designs and business logic. These embodiments enhance reliability and incorporate integrity checks for layout, business and data personalization rules, 3rd party data integration mapping, as well as evaluations of design fidelity. Furthermore, it identifies redundant content-such as identical images, content sections, data segments, and business rules-across a diverse array of CCM template designs. This leads to the automated generation of both new CCM template and a collection of shared common assets and resources, facilitating template design modernization and usability, improved editability, and enhanced production output delivery performance. Ultimately, it effectively mitigates the challenges and manual efforts associated with conventional CCM asset migration techniques, systems, and the current existing technologies available in the marketplace.

### BRIEF DESCRIPTION OF THE DRAWINGS

A clear understanding of the key features of the invention summarized above may be had by reference to the appended drawings, which illustrate one or more embodiments of methods and systems according to the present invention, although it will be understood that such drawings depict embodiments of the invention and, therefore, are not to be considered as limiting its scope regarding other embodiments which the invention is capable of contemplating.
FIG. 1 is a flow diagram showing a prior art manual CCM document/template migration analysis process employed to analyze and collect template design specification requirements.
FIG. 2 is a flow diagram showing prior art manual approach employed to redevelop CCM project including iterative development with formal design review and approval processes associated with each template project in a CCM system migration project.
FIG. 3 is a flow diagram showing one embodiment of a method and system (S101) according to the present invention which includes reference to S102 and S103 in the figures below and provides an example of automatically inspecting a compiled PDF and external data source via retrospective synthesis in accordance with one or more embodiments of the present disclosure.
FIG. 4 is a flow diagram showing one embodiment of a method and system (S102) according to the present invention which includes reference to S101, S104 and S105 in the figures referenced above and below, and provides an example of generating and mapping data variable field placeholders and data personalization context in accordance with one or more embodiments of the current disclosure.
FIG. 5 is a flow diagram showing one embodiment of a method and system (S103) according to the present invention which includes reference to figures S101, S104 and S105 in the figures referenced above and below and provides an example of generating the static content layer and context in accordance with one or more embodiments of the current disclosure.
FIG. 6 is a flow diagram showing one embodiment of a method and system (S104) which includes references to S101-3, S106, S107 and S108 which are components of the Template Synthesizer module.
FIG. 7 is a flow diagram showing one embodiment of a method and system (S106) which references content created by S101 and S102 to accommodate the Formatting Engine component (S106) of retrospective synthesis of the document design.
FIG 8 is a flow diagram showing one embodiment of a method and system (S107) for Layout Engine as referenced in S104 for retrospective synthesis of the document design layout of the new CCM.
FIG 9 is a flow diagram showing one embodiment of a method and system (S108) for a Template Builder as referenced in S104 for completing the retrospective synthesis of a new CCM template.
FIG. 10 is a flow diagram showing one embodiment of a method and system (S105) for the process flow for an automated comparison of original PDF design to newly produced output template to ensure fidelity and accuracy of conversion and reduce manual user stakeholder quality control review sessions in accordance with one or more embodiments of the present disclosure.

### DETAILED DESCRIPTION OF THE INVENTION

The embodiments of the present invention described herein relate to a system and method for completing a substantially pixel perfect conversion, retrospective synthesis and migration of portable document format (PDF) files into editable design templates. These embodiments of an automated (PDF) file conversion, retrospective analysis and synthesis invention can be run on a server, desktop computer, mobile device or within an internet hosted cloud environment reducing manual present design decomposition analysis and template design redevelopment efforts and costs associated with the replacement of these PDF files, such as in a CCM software application. The systems and methods can be implemented using many different software programming languages, and embodiments can comprise many different hardware and software components that work together to perform the conversions according to the present invention.

Some embodiments herein are directed to CCM design templates, and to effectively and efficiently replacing a legacy CCM product from a first CCM software application with a newer solution in a second CCM software application. This can transition these large-scale and highly regulated CCM documents, and embodiments of the present invention present systems and methods that minimizes the need for manual template and business logic redevelopment, ensures a pixel-perfect layout format and data alignment, reduces the necessity of operating both the legacy and new CCM products concurrently for an extended duration, and mitigates the risk of data integrity issues during the product transition process. Embodiments of the present invention provide for automated migration of CCM templates and business rules when moving from one CCM vendor having a first CCM software application, to another CCM vendor having a second CCM software application. This was not feasible prior to this invention.

Embodiment of the present invention can provide automated methods and systems through which CCM design templates, along with their associated assets, business rules and data feeds, can be recreated automatically. The present invention eliminates the need for software vendors or system implementation specialists to examine the intricate details of competing vendor CCM solutions. These embodiments also eliminate the need for extensive time frames dedicated to manual analysis of CCM design templates, manual redevelopment of template and data mappings, or the simultaneous operation of multiple CCM products due to standard system migration scenarios.

Embodiments of the present invention segment a PDF document into multiple PDF design template hierarchies to automate editable template creation, and to facilitate required infrastructure associated with data mapping needed for real-time, batch and micro-batch data integration and business rules logic generation while accommodating an automated method for rapidly validating a pixel perfect match of the converted template.

Certain embodiments of the present disclosure will now be discussed with reference to the below mentioned figures, wherein like reference numerals refer to like components. In accordance with one or more disclosed embodiments, an editable Customer CCM Design Template and associated context information is dynamically decoded and specified, generatively re-created/encoded, validated and made accessible to CCM system users. This reduces manual CCM asset redevelopment, encoding and system implementation efforts when migrating from a legacy CCM product or from a CCM solution from a different software vendor to a replacement offering.

Embodiments of the present invention can deliver an automatically generated substantially pixel perfect master document design template in a short time (e.g. within less than 30 seconds) that consists of an editable document design template, business rules logic, data mapping and a global schema of variable content. The invention does not require an understanding nor access to the original CCM vendor's design template layouts or software application to complete the synthesis of new editable pixel perfect matching CCM design templates. Instead, the invention can be employed to create an editable pixel perfect design template and supporting data logic mapping from a PDF file and one or more related external data feeds, inclusive of autonomously generating a unified local-as-view mapping of the global schema (specified independently from the data sources modeling the data feed and the links associated with an external data integration feed, and that includes processing queries in the data integration, normalization of inconsistent data sources, and reconciliation logic reasoning on disparate data source queries) which can be automatically generated from any PDF file. Specifically, the invention's local-as-view of data integrations ensures the global schema and personalization rules associated with variable content contained within the master CCM design layout is specified independently from the sources, and the relationships between the global schema and the sources are established by defining every source as a view over the global schema.

By adopting this PDF to editable design template retrospective synthesis and migration invention customers can automatically migrate their historical customer communications management design templates from any legacy, homegrown or other 3^{rd} party CCM software application while radically reducing the mostly manual, time-consuming and cost prohibitive issues associated with their system replacement project. For instance, when a company replaces its legacy CCM software, the re-platforming (i.e. migration of their customer communications design template assets, forms, data feeds/systems integration and quality control review and approval processes) for these large communications platforms to a newer and more modern machine platform/technology stack often may require first studying the legacy design outputs to determine document design patterns, data variable and business logic in the implemented as-is designs to determine the specifications/requirements for the new replacement design template, and then manually recreating all of their customer communication output design template layouts and business rules from scratch, and then recreating and mapping all of the external data integration feeds required to support the personalization of the communications while running and maintaining, in parallel, multiple costly CCM software application systems.

Prior to this invention, an overall CCM system replacement and migration project initiative could take months to years to complete leading to substantial manual effort and cost. The costs and risks associated with a CCM replacement project are a major factor faced by companies when they decide whether to complete a re-platforming or legacy system replacement project.

The present invention is described herein with reference to certain embodiments, but it is understood that the invention can be embodied in many different forms and should not be construed as limited to the embodiments set forth herein. It is further understood that different embodiments can comprise steps and processes arranged in different ways and can comprise many different features beyond those described herein.

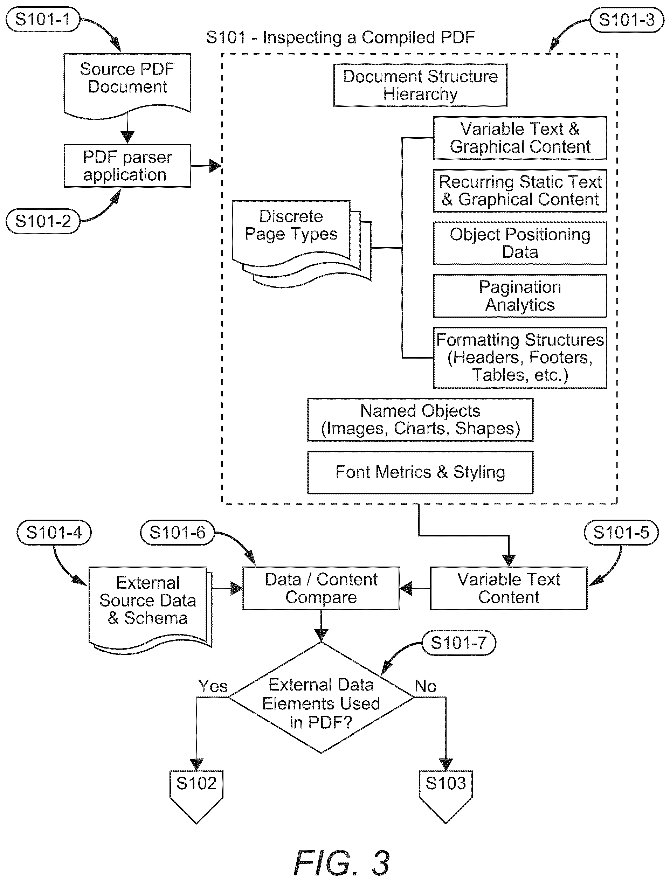

Referring to FIGs. 3-9, one embodiment of a method and system for converting and migrating the content of a PDF document into an editable design template is shown and discussed below. FIG. 3 is a flow diagram showing the software components, modules, and processes ("modules") according one embodiment of a method and system S101 according to the present invention which includes reference to software components and processes S102 and S103 in the figures below and provides an example of automatically inspecting a compiled PDF and external data source via retrospective synthesis in accordance with one or more embodiments of the present disclosure.

In one embodiment of a method and system for converting and migrating the content of a PDF document into an editable design template includes system S101, comprising one embodiment for dynamically applying an algorithm to complete retrospective synthesis of a compiled PDF (such as in CCM design template). This process determines the overall document design and structure, document headers, body and footers, components, object positioning coordinates, font layout, overflow, formatting/styling, table of contents, directory and data structure, tag descriptions, barcodes, charts, tables, shapes, images and objects, and data variables and functionality.

The system S101 then compares these same elements to the schema of an external data source to determine if external data elements were used to create the compiled PDF output or not. System S102 is executed if yes, executing system S104 (template synthesizer discussed below) to generate and map the variable content layer inclusive of the identified data variable field placeholders to external data elements contained in an integration data feed and data records, tags, and data values from one or more external data source. Business rules can be dynamically generated related to variable content that supports highly tailored and personalized PDF output and a pixel perfect design template match inclusive of design hierarchy, directory structure and format match from the migrated design template as compared to the original compiled PDF. System S103 is executed if no, then executing S104 (the template synthesizer) to generate the static content layer, segmenting the static PDF document elements and then recreation/encoding of a new and editable pixel perfect design template.

Referring now to system S101 in more detail, at Source PDF document module S101-1 the system S101 can accept a PDF output generated from a CCM system. These can comprise multiple PDFs that serve as the basis for conversion into new editable CCM design templates within a new vendor's CCM product environment. This module can handle various PDF versions and complexities, ensuring compatibility with a wide range of CCM outputs.

PDF Parser Application module S101-2 can generate and map variable content using a combination of machine learning and artificial intelligence algorithms. Module S101-2 is responsible for extracting all essential elements from the input PDF, which can include both text and graphical components. For each input PDF, detailed metadata such as position (coordinates within the document), transformation (scaling, rotation, etc.), and formatting (font styles, colors, and sizes) are captured. This data can be crucial for accurately reconstructing the document as an editable template.

The Element Classification and Representation module S101-3 of the system 10 organizes and classifies the various elements extracted by the PDF Parser Application S101-2. Categories of these elements can include but are not limited to:
Text blocks (paragraphs, headers, footers)
Images (raster and vector)
Tables and their structural components
Shapes and lines
Metadata (document properties, XMP data)
The categorization facilitates easier analysis and template creation in subsequent steps.

The External Source Data & Schema module S101-4 interfaces with external data sources used in the original PDF composition. It supports multiple data formats (CSV, XML, JSON, databases) and establishes mapping between data fields and PDF content. The module may also handle data normalization and validation to ensure consistency in the template generation process.

The Variable Text Content module S101-5 identifies elements within the PDF that correspond to variable data, and flags content that changes from one document instance to another based on the integrated data source. The module employs pattern recognition and machine learning or Al algorithms to accurately detect variable fields, even in complex layouts.

The Data/Content Compare module S101-6 can comprise a robust analysis engine that processes all textual content extracted from the PDF. It can employ advanced string-matching algorithms, regular expressions, and potentially natural language processing techniques to compare PDF content with values in the data source. This module can perform all or some of the following:
Identifies exact matches and potential variations of data-driven content
Handles complex scenarios like concatenated fields or formatted data (e.g., dates, currency)
Generates confidence scores for each potential variable element
Provides detailed reports on the variable content identified

Module S101-7 comprises a content-based processing decision tree that determines if external data elements are used in the PDF. This decision-making module determines the optimal processing path based on the types and complexity of content identified in the PDF. It considers factors that can include some or all of the following such as:
Ratio of static to variable content:
Presence of complex elements (e.g., dynamic charts, personalized images)
Data source complexity and relationships
Required output format (e.g., Elixir Cloud native format, other VDP standards)
The module may employ rule-based logic or machine learning models or Al to make these routing decisions, ensuring efficient and accurate template generation. If yes, the system 10 can perform the modules and methods in system S102, and if no, can perform the modules and methods in system S103, both of which are discussed below.

One challenge in S101 lies in the difference in font metrics between raster fonts that may be used in the original PDF documents and outline fonts that may be used as replacement. To address this, the Template Synthesizer S104 d reads font metrics, shape hints and styles from the raster fonts and identifies the best matching outline font that closely aligns with these attributes. The Template Synthesizer S104 employs artificial intelligence algorithms to minimize any discrepancies. Text widths are calculated using both the original raster fonts and their mapped outline fonts. The differences in width are then adjusted through inter-character and inter-word spacing, ensuring that the text alignment matches that of the original raster font-based text.

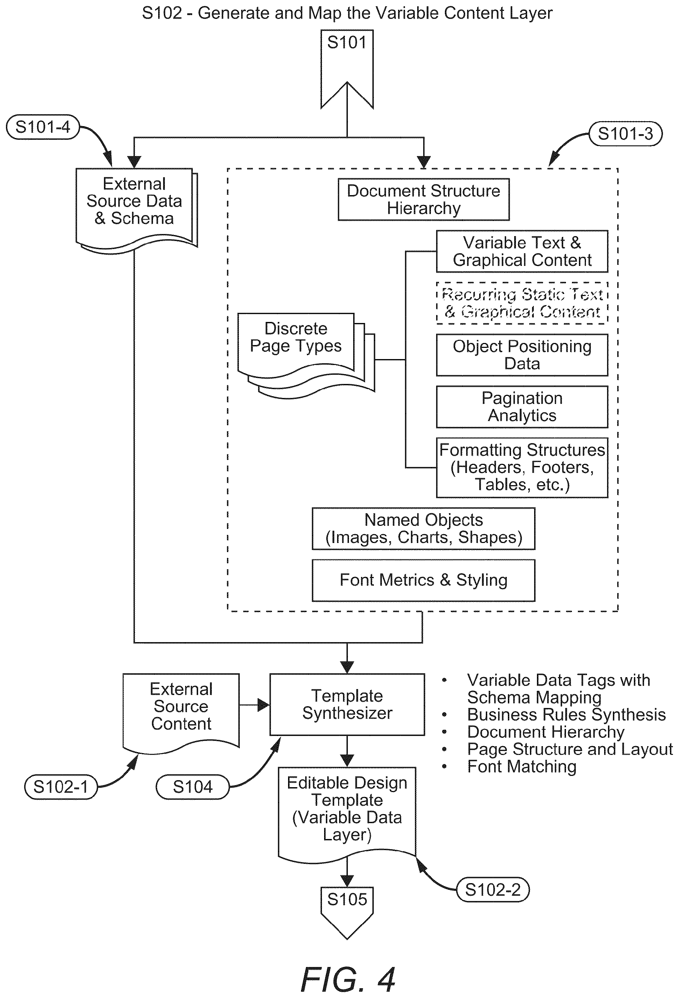

FIG. 4 is a flow diagram showing one embodiment of a Generate and Map the Variable Layer system S102 according to the present invention which includes reference to S101 discussed above and is performed based on the output of S101-7. S102 also references in S104 and S105 discussed below and references modules S101-4 and S101-3 discussed above.

S102 shows one embodiment of system for generating and mapping data variable field placeholders and data personalization context in accordance with one or more embodiments of the present invention. The External Source Content module S102-1 comprises and functions as external resource handling module. This module is responsible for processing all external resources that are referenced but not embedded within the main PDF. These resources can include linked images, custom fonts, and any additional secondary data required for lookups or translations. The module helps ensure that all external elements are accurately sourced and incorporated into the editable template to maintain the document's integrity during the variable data processing.

The Editable Design Template (variable data layer) module S102-2 creates an editable template by processing all static and dynamic elements identified during the PDF analysis. It reconstructs the document in a format that allows for future editing, ensuring both the static content and variable fields are easily modifiable. This template serves as the basis for Elixir Cloud workflows, providing flexibility for future document generation with updated or personalized content.

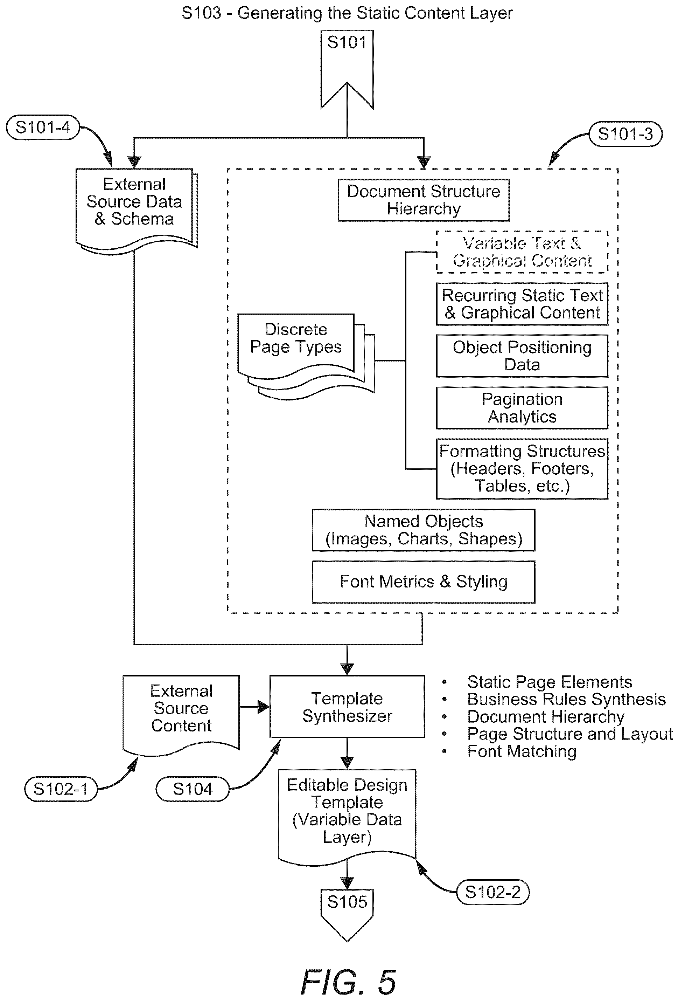

FIG. 5 is a flow diagram showing one embodiment of a Generate Static Content Layer system S103 according to the present invention which includes reference to figures S101 and is also performed based on the output of decision module S101-7 as discussed above. Modules S101-3, S101-4, S102-1 and S102-2 are also referenced and discussed above. Systems S104 and S105 are also referenced and discussed and shown below. System S103 shows a system for generating the static content layer and context in accordance with one or more embodiments of the current disclosure.

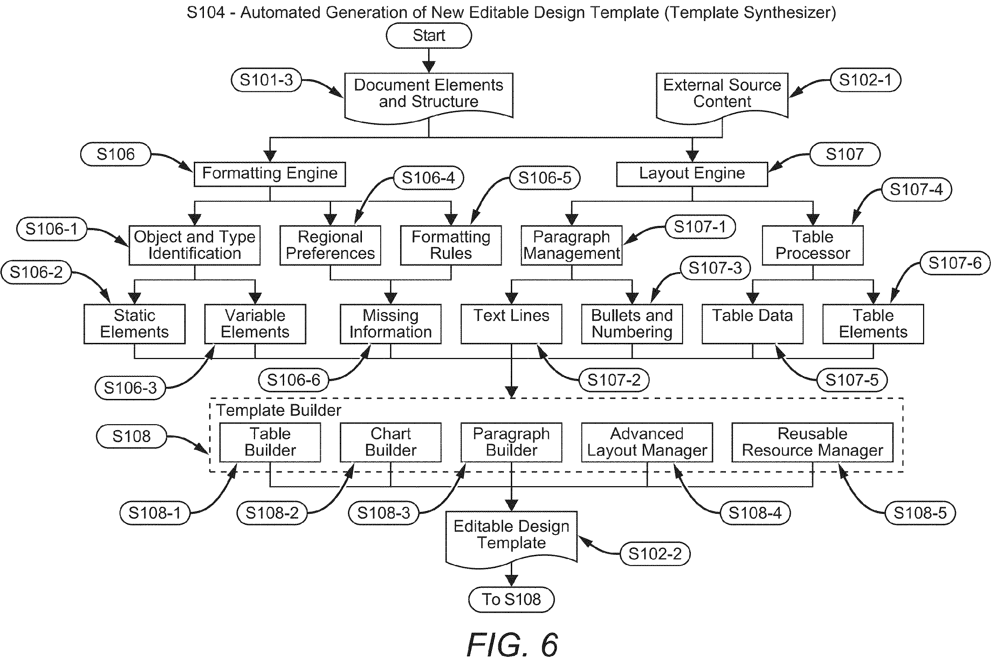

FIG. 6 is a flow diagram showing one embodiment of a method and system for Automated Generation of New Editable Design Template (Template Synthesizer) S104 which includes references to module S101-3, S102-1 and S102-2, and systems S106, S107 and S108 which are components of the Template Synthesizer module. This diagram also includes references to the Formatting and Layout Engines and a Template Builder for the automated generation of new editable design templates by way of a non-limiting set a heterogeneous machine learning and generative artificial intelligence processes and methods in accordance with one or more embodiments of the current disclosure. S104 as shown in FIG. 6 comprises one of a sophisticated and novel Formatting Engine S106 and Layout Engine S107 that serve as core components. These engines (S106 and S107) are designed to automatically identify various types of variables, including text, numeric, and date formats. Within the editable document template, they enable dynamic reformatting of these values to meet diverse output format requirements. These requirements are tailored based on linguistic conventions, regional preferences, and specific formatting rules, ensuring that the document adheres to the as is design layout's business rules.

The system illustrates how the invention automates generation of new editable CCM design templates and external Data Source mappings. This component interfaces with external data sources used in the original PDF composition. It supports multiple data formats (CSV, XML, JSON, EBCDIC, Linemode AFP, databases, etc.) and establishes mapping between variable data fields and PDF content. The module may also handle data normalization and validation to ensure consistency in the template generation process.

Referring now to FIG. 6 in more detail, Object and Type Identification module S106-1 operates as an1 object categorization module. This module classifies the various objects within the document into static and variable elements. The categorization is essential for the formatting engine, allowing it to apply the appropriate formatting rules to static content while ensuring dynamic content can be adapted based on external data inputs.

The Static Elements module S106-2 processes and identifies elements in the document that remain constant across all generated versions. These static elements include fixed text, images, and graphics that do not change based on data inputs, ensuring consistency in the document's visual structure.

The Variable Elements module S106-3 functions as a dynamic element identification module. The dynamic elements identified by this module are those whose values that are driven by external data sources or business logic. These could include personalized information such as names, addresses, or transactional data that vary from one document to another, ensuring that the document is customized as required.

The Regional Preferences module S106-4 manages the configuration of regional preferences, such as language, date formats, currency symbols, and other locale-specific settings. It ensures that the document adheres to regional standards, providing a customized user experience for different geographical markets.

The Formatting Rules module S106-5 contains a comprehensive list of formatting rules for various data types, such as numbers, dates, and text. These rules are applied during document generation to ensure consistency and correctness in how information is displayed across different documents.

The Masking Information module S106-6 generates the appropriate formatting masks for numbers, dates, and other types of data. These masks are based on the regional preferences configured in S106-4, ensuring that the data adheres to locale-specific conventions during document generation.

The Paragraph Management module S107-1 provides for paragraph copy fitting and formatting. This module is responsible for handling the copy fitting and formatting of text within paragraphs. It ensures that text fits within predefined spaces, adjusting spacing, line breaks, and font sizes to maintain visual consistency and readability.

The Text Lines module S107-2 functions as a table layout and formatting component. This component manages the layout and formatting of tabular content within the document. It organizes data into rows and columns, ensuring that the table structure adheres to predefined formatting rules and is visually appealing and easy to read.

The Bullets and Numbering module, S107-3 functions as a simple paragraph processing module. This module processes text elements that are handled as simple paragraphs. It formats standard paragraphs without additional structure, ensuring that the text appears clean and consistent across the document.

The Table Processor module S107-4 functions as a List Paragraph Processing Module. This module processes text elements structured as bulleted or numbered lists. It ensures that lists are formatted correctly, maintaining alignment, indentation, and consistent numbering or bullet styles.

The Table Data module S107-5 functions as a table cell content module. This module handles the content within individual table cells, ensuring that text, numbers, and other data are properly formatted and aligned within the table's grid structure. It ensures clarity and consistency for all cell contents.

The Table Elements module S107-6 functions as a table structure processing module This module processes structural elements of tables, such as rows, columns, headers, and footers. It ensures that the table's layout adheres to formatting rules, with proper spacing, alignment, and style applied to each structural component.

The Table Builder module S108-1 functions as a table generation component. This module of the template builder generates tables using the output provided by the table processor. It constructs tables with properly formatted rows and columns, ensuring that tabular data is presented accurately in the final document.

The Chart Generator module S108-2 function as chart generation component. This module is responsible for generating charts within the document. It processes data and creates various types of charts (bar, pie, line, etc.), ensuring that they are visually appealing and correctly formatted for inclusion in the final template.

The Paragraph Builder module S108-3 generates paragraph objects based on the formatting rules and content provided. It ensures that paragraphs are structured correctly, maintaining consistency in spacing, alignment, and text formatting.

Advanced Layout Management module S108-4 handles the complex layout arrangements of different objects within the Elixir Cloud template. It coordinates the positioning and layering of static and dynamic elements, ensuring that the overall layout adheres to design standards and visual requirements.

Reusable Resource Management module S108-5 manages reusable resources such as images, fonts, and lookup data. It ensures that these resources are properly integrated into the template, allowing for easy reuse across different sections of the document without the need for duplication, thereby optimizing the document generation process.

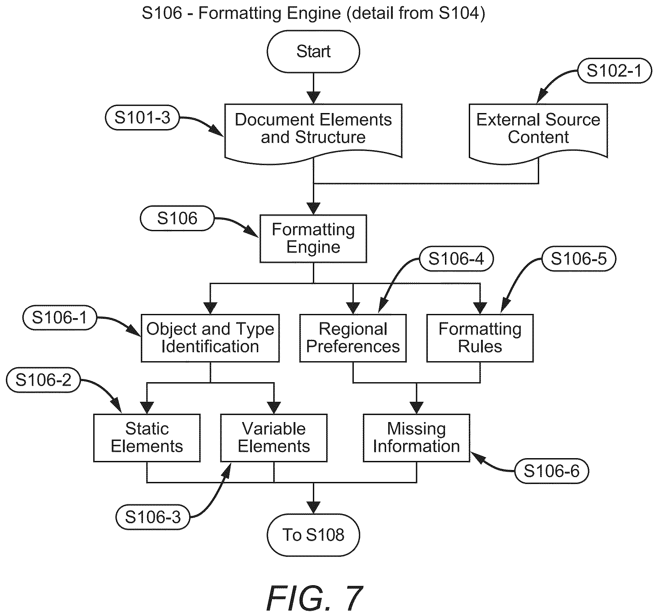

FIG. 7 is a flow diagram showing one embodiment of a Formatting Engine S106 as shown above in FIG. 6, which references to content created by modules S101-3 and S102-1 as described above to accommodate the Formatting Engine component S106 of retrospective synthesis of the document design. Formatting Engine S106 for the CCM template ss referenced in S104 as shown in FIG. 6, with modules S106-1 to S106-6 described above. The method and process for dynamically generating business rules specific to external data integration in synthesized design templates utilizes a Formatting Engine included in S106 that employs advanced machine learning, generative and agentic Al libraries. By utilizing machine learning and AI, the process enables the dynamic and versatile construction of complex business rules, logical conditions, and embedded content within the newly synthesized editable template.

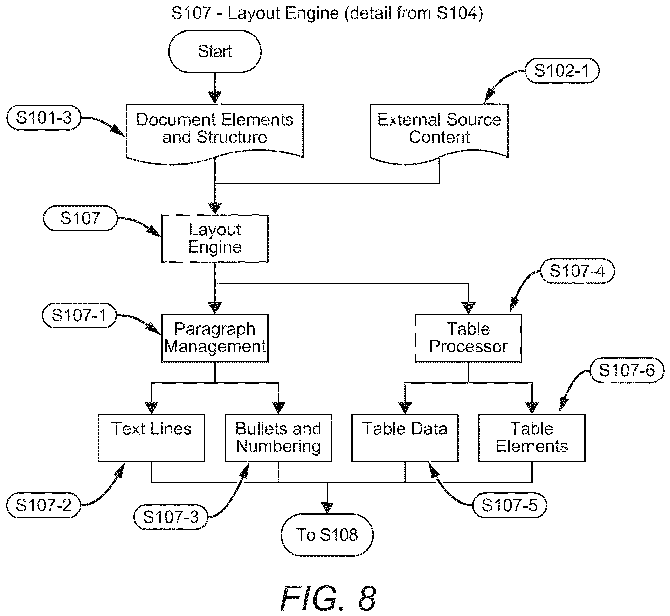

FIG 8 is a flow diagram showing one embodiment of a Layout Engine method and system S107 as referenced in S104 in FIG. 6 for retrospective synthesis of the document design layout of the new CCM. FIG. 8 references to content created by modules S101-3 and S102-1 as described above to accommodate the Layout Engine S107 of retrospective synthesis of the document design with modules S107-1 to S107-6 described above. Layout Engine S107 precisely manages the organization of paragraph lines, elements, lists, and floating images within a document. Additionally, the engine dynamically reflows the content and automatically adjusts it in response to changes in frame dimensions or page sizes. This adaptive reflow preserves the logical sequence and reading order, maintaining the document's structural integrity and accessibility despite modifications. The logical arrangement of static and variable elements enables the detection of content organized in table rows and columns. The Layout Engine also identifies all table components, including headers, footers, body, running totals, and more. This capability facilitates the transformation of content into various table formats and themes, ensuring versatility and consistency in presentation.

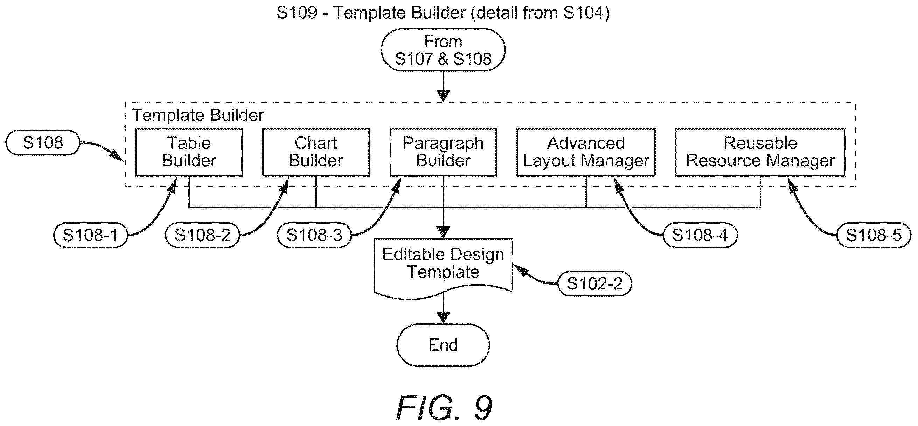

FIG 9 is a flow diagram showing one embodiment of a Template Builder method and system S108 as referenced in S104 in FIG. 6, for completing the retrospective synthesis of a new CCM template. FIG. 9 references information provided by S106 and S107 described above and references module S102-2 described above. FIG. 9 further references modules S108-1 to S108-5 described above. S108 dynamically constructs a pixel perfect template design layout match, populating the newly produced editable design template hierarchy according to the content types contained within the PDF document and a lexical database corresponding to the PDF that replicates or improves upon the original design. When evaluating tabular data, the S104 (template synthesizer) analyzes recurrences of a particular table type across two or more documents, infers whether the table has fixed or variable numbers of rows and columns, and creates a corresponding fixed or scrollable table object in the new editable template. If the table is scrollable, it sets requisite object properties including page spanning, header row repeats and "fit to" metrics. When comparing variable data values from the PDF to the source data the template synthesizer determines whether a mask was applied during the PDF composition and applies a corresponding mask invocation in the new editable template. For example, when the variable string "10/1/2024" occurs in the PDF and the matched field in the source data contains "20241001" the synthesizer determines a date mask was used and applies the mask as a formatting rule in the new template.

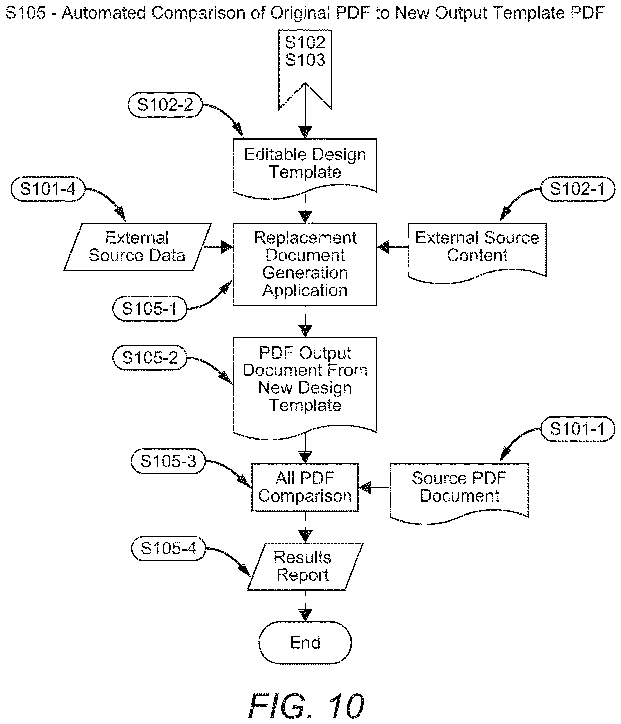

FIG. 10 is a flow diagram showing one embodiment of an Automated Comparison of Original PDF to New Output Template PDS method and system S105 for the process flow for an automated comparison of original PDF design to newly produced output template to ensure fidelity and accuracy of conversion. S105 also reduces manual user stakeholder quality control review sessions in accordance with one or more embodiments of the present disclosure. FIG. 10 makes reference to S102, S103, S102-2, S104-4, S102-1 and S101-1 as described above, and as sources for S105.

The Replacement Document Generation Application module S105-1 can take different forms and, in the embodiment shown details the Elixir Cloud Resource Compilation Module. This module aggregates and compiles all necessary resources into a unified Elixir Cloud package. This package contains all the assets and configurations required for the generation of a document that mirrors the original PDF. It includes templates, external resources (images, fonts, etc.), and the necessary metadata, ensuring that the document generation process is seamless and consistent across various environments.

PDF Output Document from New Design Template module S105-2 can take different forms and, in the embodiment shown details Elixir Cloud Template Based PDF Generation Module. Using the system-generated Elixir Cloud template, this module produces a fully formatted PDF. It accurately reproduces both the static and dynamic content in alignment with the original document's structure. This ensures that the final output is consistent with the intended layout and design, ready for deployment in variable data printing or other use cases.

Al PDF Comparison module S105-3 provides an Al-Powered Automated Comparison Tool. This Al-based tool automatically compares the original PDF with the Elixir-generated output. It meticulously identifies any discrepancies between the two documents, ensuring that the generated PDF remains faithful to the original design and content. The module generates detailed reports highlighting areas for improvement, offering suggestions and feedback for refining the Elixir template to achieve a near-perfect match with the original PDF.

The Results Report module S105-4 incorporates all feedback and changes reported by the comparison tool into the final Elixir Cloud template. It applies the necessary adjustments to ensure the generated PDF matches the original document both visually and functionally. This final template is optimized for subsequent use, ready for variable data publishing or other document generation workflows with all discrepancies resolved.

The invention includes automated error remediation and design improvement recommendation capabilities which results in either a pixel perfect CCM design template or enhanced design template (replacing low resolution raster fonts to more modern true type fonts, improving image quality and rendering logic, and the automatic creation of business and personalization rules while reducing the need for manual intervention.

### Other Uses or Applications for this Invention

The described system comprises a plurality of data and object migration systems, wherein each migration system includes a set of processes for designing static and dynamic content in a compiled format, data pattern matching and subsequently migrating data, and a formatting system for ensuring a pixel perfect match and data integration processes associates with each of the plurality of migration systems to provide concurrent operation of a plurality of PDF migration processes.
Dynamic document design template generation
Dynamic identification of design assets (images, objects, and external dependencies)
Dynamic identification of external data integration requirements
Business rules and data transformation logic generation
Identification and pattern match and identification of commonly used images, objects and content across a library of PDF designs

It is important to note the above-described capabilities represent a non-limiting subset of S104, S106, S107 and S108's functions and are in no way inclusive of the full function set.

While the present invention has been described in terms of particular embodiments and applications, in both summarized and detailed forms, it is not intended that these descriptions in any way limit its scope to any such embodiments and applications, and it will be understood that many substitutions, changes and variations in the described embodiments, applications and details of the method and system illustrated herein and of their operation can be made by those skilled in the art without departing from the spirit of this invention.

## Claims

1. A server implemented with a computer, the server comprising:
at least one processor configured to execute a computer-readable instruction, wherein the at least one processor is configured to:
accept existing editable electronic Customer Communication Management (CCM) design templates on a first CCM software application;
extract information from said existing CCM design templates, with said information from at least the group comprising template formatting, third party data mapping, and business and personalization rules requirements; and
utilizing said extracted information to create and compile new editable CCM design templates on a second CCM software application.

2. The server of claim 1, wherein said existing CCM design templates comprise portable document format (PDF) documents.

3. The server of claim 1 or claim 2, further comprising sampling of a third-party data feed to automatically create said new editable CCM design templates inclusive of static and variable content, said business and personalization rules requirements, and third-party systems data mapping with pixel perfect fidelity.

4. The server of any of the claims 1-3, further comprising identifying duplicate imagery and content assets across said CCM template designs and including said duplicate assets in said new editable CCM design template, wherein optionally said duplicate assets are from the group comprising identical images, content sections, data segments, and business rules.

5. The server of any of the claims 1-4, wherein further comprising an integrity check to identify conversion errors from said existing editable CCM design templates and said new editable CCM design templates.

6. The server of claim 5, further comprising automated remediation of said conversion errors and design improvement recommendation generation, wherein optionally said remediation and said improvement recommendation generation results in a substantially pixel perfect new editable CCM design template or enhanced design template.

7. The server of any of the claims 1-6, utilizing approach of machine learning, generative artificial intelligence (AI) or agentic AI.

8. The server of claim 4, utilizing machine learning, generative artificial intelligence (AI) or agentic Al for inference and identifying duplicate imagery and content assets.

9. The server of claim 8, further utilizing said machine learning, generative artificial intelligence (AI) or agentic Al to reverse engineer existing editable electronic CCM design templates, then auto create new editable CCM design templates.

10. A method for converting electronic Customer Communication Management documents, the server comprising:
accepting existing editable electronic Customer Communication Management (CCM) design templates on a first CCM software application;
extracting information from said existing CCM design templates, with said information from at least the group comprising template formatting, third party data mapping, and business and personalization rules requirements; and
utilizing said extracted information to create and compile new editable CCM design templates on a second CCM software application.

11. The method of claim 10, wherein said existing CCM design templates comprise portable document format (PDF) documents.

12. The method of claim 10 or claim 11, further comprising sampling of a third-party data feed to automatically create said new editable CCM design templates inclusive of static and variable content, said business and personalization rules requirements, and third-party systems data mapping with pixel perfect fidelity.

13. The method of any of the claims 10-12, further comprising identifying duplicate imagery and content assets across said CCM template designs and including said duplicate assets in said new editable CCM design template, wherein optionally said duplicate assets are from the group comprising substantially identical images, content sections, data segments, and business rules.

14. The method of any of the claim 10-13, further comprising identifying conversion errors from said existing editable CCP design templates and said new editable CCP design templates, optionally further comprising automated remediation of said conversion errors and design improvement recommendation generation.

15. The method of any of the claims 10-14, utilizing approach of machine learning, generative artificial intelligence (AI) or agentic AI, optionally further utilizing machine learning, generative artificial intelligence (AI) or agentic Al for inference and for reverse engineer existing editable electronic CCM design templates, then auto create new editable CCM templates.
